# EUROPÄISCHE PATENTSCHRIFT

(11) **EP 2 542 448 B1**
(45) Veröffentlichungstag und Bekanntmachung des Hinweises auf die Patenterteilung: **20.09.2017**
(21) Anmeldenummer: 11706542.5
(22) Anmeldetag: 28.02.2011
(51) Int. Cl.: B60Q 1/26, B60Q 1/30, F16B 2/10, F16B 5/06, F16B 2/18, F16B 2/12

(54) **FAHRZEUGLEUCHTE UND VERFAHREN ZUM MONTIEREN EINER FAHRZEUGLEUCHTE**
VEHICLE LAMP AND METHOD FOR MOUNTING A VEHICLE LAMP
FEU DE VÉHICULE ET PROCÉDÉ DE MONTAGE D'UN FEU DE VÉHICULE

(30) Priorität: 05.03.2010 DE 102010010414
(43) Veröffentlichungstag der Anmeldung: 09.01.2013
(73) Patentinhaber: Bayerische Motoren Werke Aktiengesellschaft, 80809 München (DE)
(72) Erfinder: FLEISCHER, Walter, 80939 Muenchen (DE); FEDER, Richard, 85419 Mauern (DE); MEICHSNER, Jörg, 82467 Garmisch-Partenkrichen (DE); OSWALD, Birger, 39418 Stassfurt (DE)
(86) Internationale Anmeldenummer: PCT/EP2011/052905
(87) Internationale Veröffentlichungsnummer: WO 2011/107425

(56) Entgegenhaltungen:
- EP-A2- 1 923 264
- WO-A1-00/65703
- AU-B2- 752 428
- DE-A1-102004 006 970
- DE-A1-102007 006 257
- FR-A1- 2 905 093
- GB-A- 832 921
- US-A1- 2002 131 271
- US-A1- 2004 164 207

## Beschreibung

Die Erfindung betrifft eine Fahrzeugleuchte, insbesondere eine Bremsleuchte, insbesondere eine dritte oder hochgesetzte Bremsleuchte, und ein Verfahren zum Montieren einer Fahrzeugleuchte, insbesondere Bremsleuchte.

Aus der DE 10 2007 006 257 A1 ist eine Fahrzeugleuchte zum Einbau in einen Karosserieausschnitt eines Karosserieteils bekannt. Das Leuchtenteil wird über einen einfachen Haltebügel, der als Druckfeder dient, an ein Karosserieteil gedrückt. Dazu sind die Haltebügel elastisch ausgeführt und werden in Verankerungsabschnitte eingeführt.

Aus der EP 1923264 A2 ist eine Fahrzeugleuchte, insbesondere eine dritte Bremsleuchte bekannt. Die Fahrzeugleuchte weist einen Einführbereich zum Einführen in eine Ausnehmung eines Fahrzeugteils und einen Aufsatzbereich zum Aufsetzen der Fahrzeugleuchte an einem Rand der Ausnehmung auf. Der Aufsatzbereich ragt zumindest abschnittsweise seitlich über den Einführbereich hinaus. Der Einführbereich weist mindestens ein Hinterrastelement auf. Das Hinterrastelement ist dazu ausgestaltet, die Fahrzeugleuchte an dem Fahrzeugteil zu verrasten. Der Einführbereich weist ferner mindestens ein Verriegelungselement zum Verschieben des mindestens einen Hinterrastelements in Richtung des Aufsatzbereichs auf.

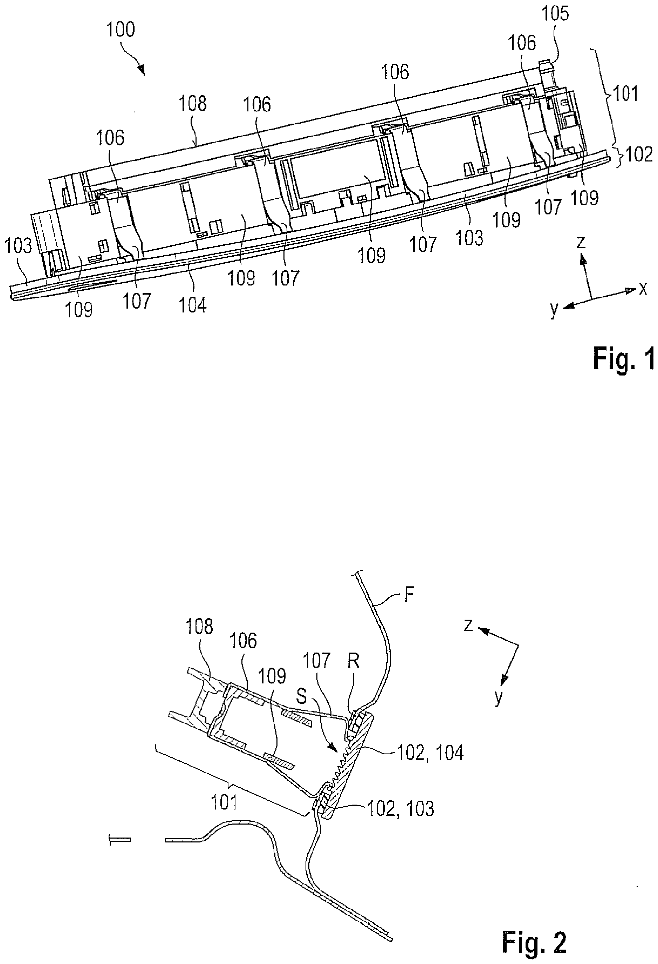

Fig.1 zeigt in Schrägansicht eine herkömmliche hochgesetzte oder dritte Bremsleuchte 100. Fig.2 zeigt als Schnittdarstellung in Seitenansicht die in eine Ausnehmung S eines Fahrzeugteils F eingesetzte Bremsleuchte 100.

Bezug nehmend auf beide Figuren weist die Bremsleuchte 100 einen Einführbereich 101 zum Einführen in die Ausnehmung S und einen Aufsatzbereich 102 zum Aufsetzen der eingeführten Bremsleuchte 100 auf einem Rand R der Ausnehmung S auf. Der Aufsatzbereich 102 ragt zumindest abschnittsweise seitlich (in x- und/oder y-Richtung) über den Einführbereich 101 und die Ausnehmung S hinaus. Hier ragt der Aufsatzbereich 102 umlaufend seitlich über die Ausnehmung S hinaus, um ein Eindringen von Feuchtigkeit und Schmutz in die Ausnehmung S zu verhindern. Dazu weist der Aufsatzbereich 102 an seinem seitlich überstehenden Bereich auf der dem Fahrzeugteil F zugewandten Seite zusätzlich eine umlaufende Dichtung 103 auf. Die Dichtung 103 wird von einer lichtdurchlässigen, z.B. rot eingefärbten, plattenartigen Abdeckung 104 getragen. Die Abdeckung 104 deckt mindestens eine Lichtquelle (o.Abb.), z.B. Leuchtdiode, der Bremsleuchte 100 ab und weist in eine Lichtabstrahlrichtung. Während sich der Aufsatzbereich 102 im Wesentlichen in der x/y-Ebene erstreckt, steht der Einführbereich 101 dazu im Wesentlichen senkrecht in z-Richtung hoch.

Die mindestens eine Lichtquelle ist typischerweise in einem Grundkörper 109 des Einführbereichs 101 untergebracht. Der Grundkörper 109 ist mit einem Kabelkanal oder einem elektrischen Anschluss 105 zum Einführen oder Anschließen mindestens einer elektrischen Leitung zur Versorgung und ggf. Ansteuerung der mindestens einen Lichtquelle ausgerüstet. An dem Grundkörper 109 sind ferner vier umgekehrt 'U'-förmige, nach innen biegsame Hinterrastelemente 106 angebracht. Die Hinterrastelemente 106 weiten sich an ihrem zum Aufsatzbereich 102 gerichteten Ende hin seitlich auf und bilden so beidseitig jeweils einen nach außen gerichteten Rastvorsprung 107. Der Rastvorsprung 107 ragt in einem nicht eingedrückten bzw. entspannten Zustand seitlich über die Ausnehmung S hinaus. Der Rastvorsprung 107 weist genauer gesagt im Wesentlichen die Form einer Rampe auf, welche sich in Richtung zum Aufsatzbereich 102 hin aufweitet und dann an einer Kante gegenüber dem Aufsatzbereich 102 steil abfällt.

Um einen festen Sitz der Bremsleuchte 100 zu unterstützen, können die Hinterrastelemente 106 durch einen in Längsrichtung der Bremsleuchte 100, entsprechend der x-Ausrichtung, verschiebbaren Riegel 108 in Richtung des Aufsatzbereichs 102 verschoben bzw. gedrückt werden und in einer Verriegelungsstellung verriegelt werden.

Für eine Montage der Bremsleuchte 100 an dem Fahrzeugteil F wird die Bremsleuchte 100 mit ihrem Einführbereich 101 mit entriegelten Hinterrastelementen 106 in einer der z-Richtung entsprechenden Einführrichtung in die Ausnehmung S eingeschoben. Stoßen dabei die Rastvorsprünge 107 der Hinterrastelemente 106 an den Rand R der Ausnehmung S, werden sie mit fortschreitender Einschubbewegung elastisch nach innen in den Grundkörper 109 eingedrückt, bis die Kante des Rastvorsprungs 107 den Rand R der Ausnehmung S passiert hat. Danach rastet der Rastvorsprung 107 aus und hinterrastet bzw. verrastet die Bremsleuchte 100 an der Ausnehmung S. Durch die steile Kante des Rastvorsprungs 107 wird verhindert, dass der Einführbereich 101 wieder aus der Ausnehmung S herausgleiten kann. In dem montierten Zustand wird der Rand R der Ausnehmung S zwischen den Rastvorsprüngen 107 der Hinterrastelemente 106 und der Dichtung 103 eingepresst. Durch das folgende seitliche Verschieben des Riegels 108 in die Verriegelungsstellung werden die Hinterrastelemente 106 noch stärker auf den Rand R gedrückt, was eine Dichtigkeit erhöht.

Bei der bekannten Bremsleuchte 100 ist der Kraftaufwand für eine sichere Verrastung und damit Montage vergleichsweise hoch. Zudem ist eine Verrastung aller Hinterrastelemente 106 nur schwierig festzustellen, so dass es in einigen Fällen auch zu einer lokal fehlenden Verrastung kommen kann, welche nicht erkannt wird und an der Schmutz und Feuchtigkeit in die Ausnehmung S dringen können, was z.B. zu einem Ausfall einer oder aller Lichtquellen führen kann. Zudem ist eine Abstimmung der Ausnehmung S und einer Verprägung des Fahrzeugteils, insbesondere falls es aus Blech hergestellt ist, im Zusammenhang mit der Dichtung 103 und dem mindestens einen Hinterrastelement 106 der Bremsleuchte 100 aufwändig. Ferner ist die gezeigte Anordnung nicht sehr robust. Darüber hinaus sind die GWK-Kosten für Gewährleistung und Kulanz vergleichsweise hoch. Darüber hinaus tritt ein Überschnitt bzw. eine Kollision zwischen den Rastvorsprüngen 107 und der Dichtung 103 auf, wodurch es bereits im unmontierten Zustand zu einer Beschädigung der Dichtung 103 kommen kann.

Es ist die **Aufgabe** der vorliegenden Erfindung, zumindest eine der oben genannten Nachteile zu vermeiden oder wenigstens abzumildern und insbesondere eine Bremsleuchte bereitzustellen, welche sich mit geringem Kraftaufwand sicher montieren und ggf. auch demontieren lässt.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch eine Fahrzeugleuchte, aufweisend
- einen Einführbereich zum Einführen in eine Ausnehmung eines Fahrzeugteils und
- einen Aufsatzbereich zum Aufsetzen der eingeführten Fahrzeugleuchte an einem Rand der Ausnehmung, wobei der Aufsatzbereich zumindest abschnittsweise seitlich über den Einführbereich hinausragt, wobei
- der Einführbereich mindestens ein Hinterrastelement aufweist, wobei das Hinterrastelement dazu ausgestaltet ist, die Fahrzeugleuchte, insbesondere bei einem Einführen in die Ausnehmung, an dem Fahrzeugteil zu verrasten, insbesondere hinterrasten, wobei
- der Einführbereich mindestens ein Verriegelungselement zum Verschieben des mindestens einen Hinterrastelements in Richtung des Aufsatzbereichs aufweist und wobei
- das mindestens eine Verriegelungselement jeweils als ein Hebel ausgebildet ist.

Die Fahrzeugleuchte kann somit nach einem Hinterrasten der Ausnehmung durch ein Verschwenken des mindestens einen Hebels an das Fahrzeugteil heranbewegt werden, wodurch die Fahrzeugleuchte an das Fahrzeugteil gepresst werden. Dabei ist der Kraftaufwand für eine sichere Verrastung und Anpressung vergleichsweise gering. Zudem ist eine korrekte Verrastung und Anpressung aller Hinterrastelemente einfach festzustellen. Auch ist eine Abstimmung der Ausnehmung und einer Verprägung des Fahrzeugteils, insbesondere aus Blech, im Zusammenhang mit dem Aufsatzbereich, insbesondere einer Dichtung davon, und dem mindestens einen Hinterrastelement vergleichsweise einfach zu bewerkstelligen. Außerdem ist die gezeigte Anordnung robust und ausfallsicher. Darüber hinaus sind die GWK-Kosten für Gewährleistung und Kulanz vergleichsweise gering. Zudem wird der Überschnitt zwischen dem Hinterrastelement und der Dichtung vermieden.

Die Fahrzeugleuchte kann insbesondere eine Bremsleuchte, insbesondere eine dritte oder hochgesetzte Bremsleuchte, sein.

Der Fahrzeugteil kann ein Teil eines Fahrzeugs sein, z.B. ein Spoiler, oder ein Zubehörteil oder Ersatzteil. Das Fahrzeugteil kann als ein Gehäuse ausgestaltet sein, die Fahrzeugleuchte somit in ein Gehäuse eingesetzt werden.

Der Aufsatzbereich kann bei einer Anordnung der Fahrzeugleuchte an einem Außenbereich des Fahrzeugs eine äußere Abdeckung gegen die Umgebung darstellen, während sich der Einführbereich z.B. im Innern des Fahrzeugs befinden kann. Insbesondere in diesem Fall ist der Aufsatzbereich mit einer Dichtung ausgerüstet, um ein Eindringen von Schmutz und/oder Feuchtigkeit in das Fahrzeug zu verhindern. Der Einführbereich kann insbesondere senkrecht von dem Aufsatzbereich abgehen.

Es ist eine Ausgestaltung, dass der Hebel zwischen einer Entriegelungsstellung und einer Verriegelungsstellung verschwenkbar ist, wobei dann, wenn sich der Hebel in der Entriegelungsstellung befindet, das Hinterrastelement einen größeren Abstand von dem Aufsatzbereich annehmen kann als wenn sich der Hebel in der Verriegelungsstellung befindet. So ist ein sicherer Sitz der Fahrzeugleuchte mittels einer besonders einfachen Betätigung des Hebels erreichbar.

Es ist eine weitere Ausgestaltung, dass der Hebel in der Verriegelungsstellung verrastbar ist, insbesondere an dem Einführbereich. Dadurch kann ein unbeabsichtigtes Überführen des Hebels aus der Verriegelungsstellung in die Entriegelungsstellung und somit eine Bildung lokaler Undichtigkeiten verhindert werden.

Es ist noch eine Ausgestaltung, dass der mindestens eine Hebel jeweils mindestens einen exzenterförmigen Kontaktbereich aufweist, dessen minimaler Abstand zu dem Aufsatzbereich in der Verriegelungsstellung geringer ist als in der Entriegelungsstellung. So kann eine Verschwenkbewegung des Hebels besonders einfach in eine lineare Verschiebung des Hinterrastelements auf das Fahrzeugteil oder in ein direktes Andrücken des Hebels an das Fahrzeugteil umgesetzt werden.

Es ist eine besondere Ausgestaltung, dass der Hebel das Hinterrastelement mit seinem exzenterförmigen Kontaktbereich zum Bewegen des Hinterrastelements kontaktiert.

Es ist eine alternative Ausgestaltung, dass der Hebel und das einstückig ausgebildet sind und der mindestens eine exzenterförmige Kontaktbereich dem Aufsatzbereich direkt gegenüberliegt. Der Hebel kann dadurch direkt als das Hinterrastelement dienen, und also kann auf als Hinterrastelemente dienende Zwischenelemente, wie z.B. eine Hinterrastklammer, verzichtet werden. Dadurch können Bauteile eingespart werden. Der exzenterförmige Kontaktbereich kann direkt zum Andrücken der Fahrzeugleuchte dienen.

Es ist außerdem eine Ausgestaltung, dass das Hinterrastelement zumindest bereichsweise ein im Wesentlichen umgekehrt U-förmiges Querschnittsprofil aufweist und an jedem seiner beiden Schenkel mindestens einen nach außen weisenden Rastvorsprung aufweist. Jedoch ist das Hinterrastelement nicht darauf beschränkt. So kann ein Hinterrastelement auch nur einseitig an dem Grundkörper angeordnet sein, z.B. im Wesentlichen in Form eines ebenen Plättchens oder Lasche. Zum Beispiel können dass die Hinterrastelemente nur an einer Seite des Grundkörpers angeordnet sein, oder alternativ können Hinterrastelemente an beiden Seiten des Grundkörpers vorhanden sein, aber dann nicht direkt miteinander verbunden oder einstückig ausgeführt, sondern als unabhängig voneinander betätigbare Elemente.

Es ist eine spezielle Ausgestaltung, dass das Hinterrastelement mindestens zwei Bereiche mit jeweils einem solchen im Wesentlichen umgekehrt U-förmigen Querschnittsprofil aufweist. Beispielsweise kann das Hinterrastelement zwei einzelne Hinterrastelemente (z.B. Hinterrastklammern, welche dann in etwa den zwei Bereichen entsprechen können) zusammenfassen und so zwei Hebel einsparen.. Die zwei Bereiche können z.B. durch den Hebel voneinander getrennt sein.

Es ist ferner eine Ausgestaltung, dass der Hebel bügelförmig (insbesondere in umgekehrter 'U'-Form) ausgebildet ist. So kann auf einfache Weise mit einer einzigen Hebelbewegung beidseitig (an beiden Schenkeln) eine Verschiebebewegung durchgeführt werden. Dies kann erstens eine Verkantung eines Hinterrastelements verhindern und/oder zweitens eine sicherere Verrastung ermöglichen. Jedoch kann der Hebel alternativ nichtbügelförmig ausgebildet sein, z.B. als ein im Wesentlichen geradliniger Hebel.

Es ist darüber hinaus eine Ausgestaltung, dass der Hebel an dem Einführbereich bezüglich einer fest vorgegebenen Drehachse drehbar gelagert ist, also immer nur um die gleiche Drehachse bewegt werden kann.

Es ist noch eine Ausgestaltung, dass der Hebel an dem Einführbereich achsenlos, d.h., ohne eine in jeder Stellung fest vorgegebene Drehachse, verschwenkbar ist. So kann auf Mittel zur fest vorgegebenen Drehlagerung des Hebels an dem Einführungsbereich verzichtet werden.

Die Aufgabe wird auch gelöst durch ein Verfahren zum Montieren einer Fahrzeugleuchte, insbesondere Bremsleuchte, insbesondere wie oben beschrieben, wobei das Verfahren mindestens die folgenden Schritte aufweist:
- Einführen des Einführbereichs der Fahrzeugleuchte durch die Ausnehmung des Fahrzeugteils, bis das mindestens eine Hinterrastelement nach einem Durchgang durch die Ausnehmung seitlich ausrastet und
- Verschwenken des mindestens einen Hebels so, dass das zugehörige Hinterrastelement sich in Richtung des Aufsatzbereichs bewegt, so dass ein die Ausnehmung umgebender Randbereich des Fahrzeugteils zumindest abschnittsweise zwischen dem Einführbereich und dem Aufsatzbereich eingepresst wird.

Es ist eine Weiterbildung, dass bei dem Schritt des Verschwenkens des mindestens einen Hebels der Hebel mit seinem exzenterförmigen Kontaktbereich das Hinterrastelement in Richtung des Aufsatzbereichs verschiebt.

Es ist eine alternative Weiterbildung, dass bei dem Schritt des Verschwenkens des mindestens einen Hebels der Hebel sich mit seinem exzenterförmigen Kontaktbereich dem Aufsatzbereich nähert. So kann auf ein gesondertes Hinterrastelement verzichtet werden.

In den folgenden Figuren wird die Erfindung anhand von Ausführungsbeispielen schematisch genauer beschrieben. Dabei können zur Übersichtlichkeit gleiche oder gleichwirkende Elemente mit gleichen Bezugszeichen versehen sein.
- Fig.3: zeigt in Schrägansicht eine erfindungsgemäße Bremsleuchte gemäß einer ersten Ausführungsform;
- Fig.4: zeigt als Schnittdarstellung in Seitenansicht die in eine Ausnehmung eines Fahrzeugteils eingesetzte Bremsleuchte gemäß der ersten Ausführungsform;
- Fig.5: zeigt in Schrägansicht einen Hebel der Bremsleuchte gemäß der ersten Ausführungsform;
- Fig.6: zeigt in Schrägansicht ein Hinterrastelement der Bremsleuchte gemäß der ersten Ausführungsform;
- Fig.7: zeigt in Schrägansicht eine Kombination aus dem Hebel und dem Hinterrastelement der Bremsleuchte gemäß der ersten Ausführungsform;
- Fig.8: zeigt in Schrägansicht eine erfindungsgemäße Bremsleuchte gemäß einer zweiten Ausführungsform;
- Fig.9: zeigt in Schrägansicht eine erfindungsgemäße Bremsleuchte gemäß einer dritten Ausführungsform;
- Fig.10: zeigt in Seitenansicht einen Ausschnitt aus der Bremsleuchte gemäß der dritten Ausführungsform in einem Bereich eines Hebels.

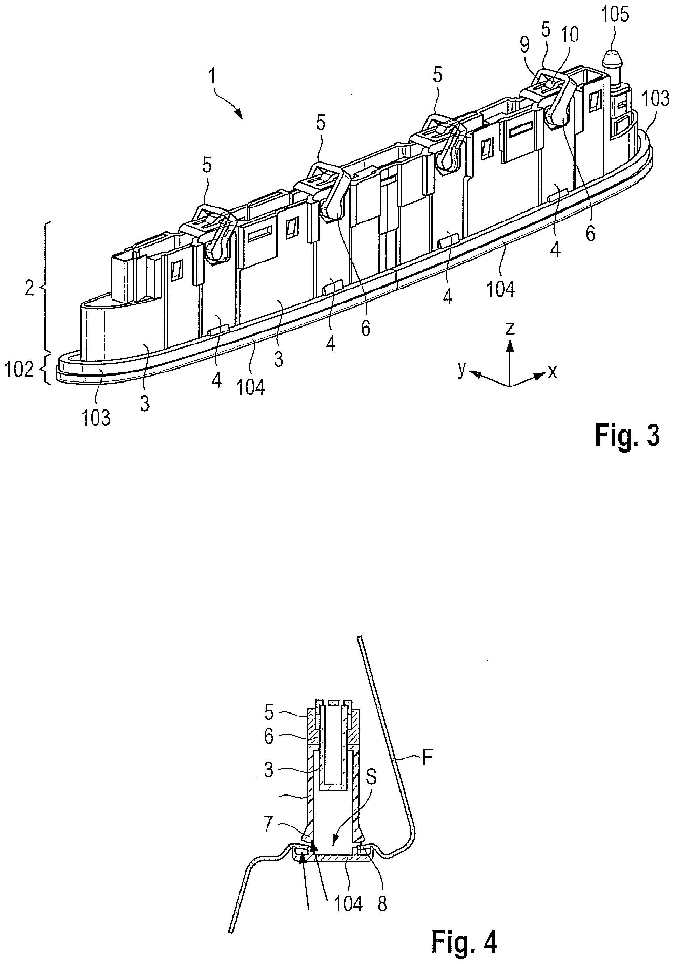

**Fig.3** zeigt in Schrägansicht eine erfindungsgemäße Fahrzeugleuchte in Form einer Bremsleuchte 1 gemäß einer ersten Ausführungsform. **Fig.4** zeigt als Schnittdarstellung in Seitenansicht die in die Ausnehmung S des Fahrzeugteils F eingesetzte Bremsleuchte 1.

Die Bremsleuchte 1 weist einen zu der Bremsleuchte 100 ähnlichen Grundaufbau mit einem Einführbereich 2 zum Einführen in die Ausnehmung S und dem Aufsatzbereich 102 auf. Auch die Bremsleuchte 1 weist an einem Grundkörper 3 senkrecht (in z-Ausrichtung) verschieblich gelagerte Hinterrastelemente 4 auf, welche aber nun mittels eines jeweiligen an dem Grundkörper 3 drehbar gelagerten, bügelförmigen Hebels 5 in Richtung des Aufsatzbereichs 102 verschiebbar sind.

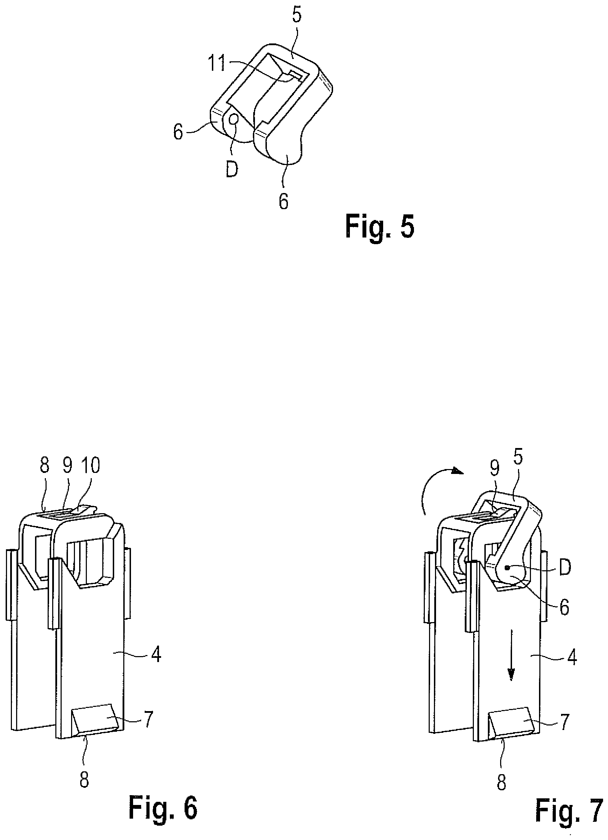

Der Hebel 5 ist als Einzelteil in **Fig.5** dargestellt. Der Hebel 5 ist in Fig.3 abwechselnd als Drahtkörper und als Vollkörper dargestellt. Mittels einer Verschwenkung eines jeweiligen Hebels 5 kann ein zugehöriges Hinterrastelement 4, das als Einzelteil in **Fig.6** gezeigt ist, einzeln verschoben werden. Das Hinterrastelement 4 weist einen umgekehrt 'U'-förmigen (klammerförmigen) Querschnittsprofil auf. Dabei ist der Hebel 5 zwischen einer Entriegelungsstellung, in welcher das Hinterrastelement 4 vergleichsweise weit nach oben (in z-Richtung) verschoben werden kann, und einer Verriegelungsstellung, die in **Fig.7** gezeigt ist und bei der der Hebel 5 das Hinterrastelement 4 nach unten (entgegen der z-Richtung) drückt, verschwenkbar. Dazu weist der Hebel 5 einen exzenterförmigen Kontaktbereich 6 auf, dessen (minimaler) Abstand zu dem Aufsatzbereich 102 in einer Verriegelungsstellung geringer ist als in einer Entriegelungsstellung. Bei einer Verschwenkung des Hebels 5 um seine Drehachse D aus der Entriegelungsstellung in die Verriegelungsstellung, was in Fig. 7 durch den gebogenen Pfeil angedeutet ist, drückt der exzenterförmige Kontaktbereich 6 folglich das Hinterrastelement 4 aufgrund einer Verlängerung des Lastarms nach unten, wie in Fig.7 durch den geraden Pfeil angedeutet.

Das Hinterrastelement 4 weist an der Außenseite der Schenkel im Bereich der freien Enden beidseitig jeweils einen Rastvorsprung 7 auf, welcher in seinem nicht eingedrückten bzw. entspannten Zustand seitlich über die Ausnehmung S hinausragt, wie z.B. in Fig.4 gezeigt. Der Rastvorsprung 7 weist auch hier im Wesentlichen die Form einer Rampe auf, welche sich nach unten (in Richtung zum Aufsatzbereich 102 bzw. zum unteren Rand des Hinterrastelements 4 hin) aufweitet und dann an einer Kante 8 steil abfällt. Das Hinterrastelement 4 und damit der Rastvorsprung 7 sind aus einem elastisch biegsamen Kunststoff hergestellt. Der Rastvorsprung 7 weist eine im Grundsatz gleiche Befestigungsfunktion auf wie der Rastvorsprung 107.

Das Hinterrastelement 4 weist ferner an seiner Oberseite 8 eine auf einer elastisch federnden Lasche 9 angeordnete Rastnase 10 auf, welche den Hebel 5 selbst in der Verriegelungsstellung lösbar verrastet hält. Dazu weist der Hebel 5 eine passende Rastaussparung 11 auf.

Für eine Montage der Bremsleuchte 1 an dem Fahrzeugteil F wird die Bremsleuchte 1 mit ihrem Einführbereich 2 mit entriegelten Hinterrastelementen 4 in einer der z-Richtung entsprechenden Einführrichtung in die Ausnehmung S eingeschoben. Stoßen dabei die Rastvorsprünge 7 der Hinterrastelemente 4 an den Rand R der Ausnehmung S, werden sie mit fortschreitender Einschubbewegung elastisch nach innen in den Grundkörper 3 eingedrückt, bis die Kante 8 des Rastvorsprungs 7 den Rand R der Ausnehmung S passiert hat. Danach rastet der Rastvorsprung 7 wieder aus und hinterrastet bzw. verrastet die Bremsleuchte 1 an der Ausnehmung S, wie in Fig.4 gezeigt. Durch das folgende Umlegen der Hebel 5 aus der Entriegelungsstellung in die Verriegelungsstellung werden die Hinterrastelemente 4 jeweils auf den Rand R gedrückt und dadurch auch die Dichtung 103 auf die andere Seite des Rands R gedrückt.

Bei der Bremsleuchte 1 ist der Kraftaufwand für eine sichere Verrastung und folgende Anpressung an das Fahrzeugteil F vergleichsweise gering. Zudem ist eine korrekte Verrastung und Anpressung aller Hinterrastelemente 106 einfach festzustellen. Auch ist eine Abstimmung der Ausnehmung S und einer Verprägung des Fahrzeugteils, insbesondere aus Blech, im Zusammenhang mit der Dichtung 103 und dem mindestens einen Hinterrastelement 4 nun vergleichsweise einfach zu bewerkstelligen. Außerdem ist die gezeigte Anordnung robust und ausfallsicher. Darüber hinaus sind die GWK-Kosten für Gewährleistung und Kulanz vergleichsweise gering.

Um ein sicheres Hinterrasten zu unterstützen, kann das Hinterrastelement 4 in der geöffneten oder Entriegelungsstellung oben (insbesondere entfernter von dem Aufsatzbereich) gehalten werden. Dazu kann der Hebel 5 eine Nase aufweisen, welche als ein Anschlag für das Hinterrastelement 4 in Richtung nach Unten (zu dem Aufsatzbereich hin) dient, wobei sich die Nase mit dem Verschwenken des Hebels 5 in die geschlossene oder Verriegelungsstellung absenkt, um eine Bewegung des Hinterrastelements 4 in Richtung des Aufsatzbereichs zu ermöglichen.

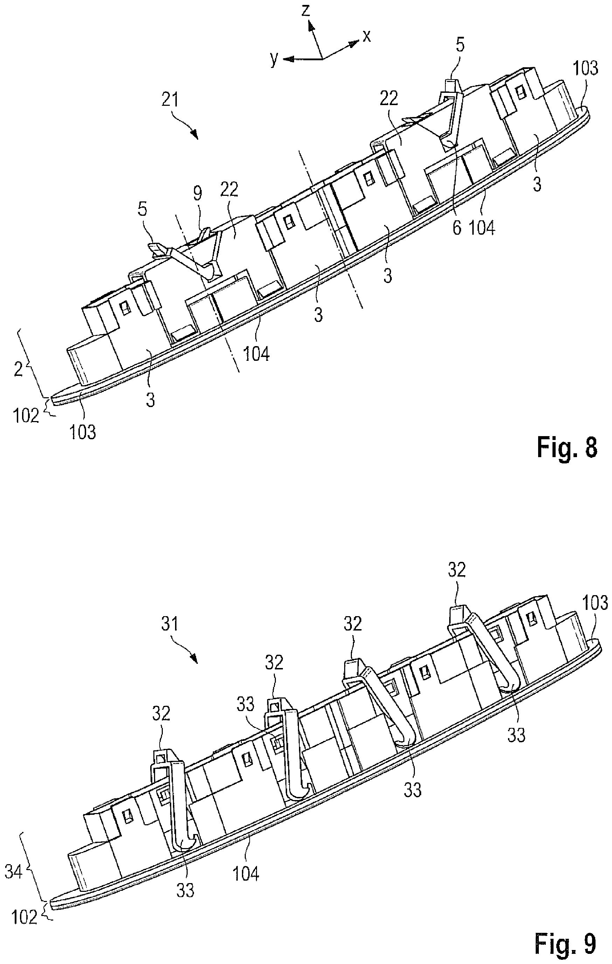

**Fig.8** zeigt in Schrägansicht eine Bremsleuchte 21 gemäß einer zweiten Ausführungsform. Die Bremsleuchte 21 ist ähnlich zu der Bremsleuchte 1 aufgebaut, wobei aber nun lediglich zwei Hinterrastelemente 22 verwendet werden, welche im Gegenzug (in x-Richtung) verlängert sind und auf beiden Seiten zwei Rastvorsprünge 7 aufweisen. Das Hinterrastelement 22 kann auch als aus zwei Hinterrastelementen 4 zusammengefasst angesehen werden und ist funktional gleichwirkend, außer dass in der zweiten Ausführungsform zwei Hebel 5 eingespart werden können.

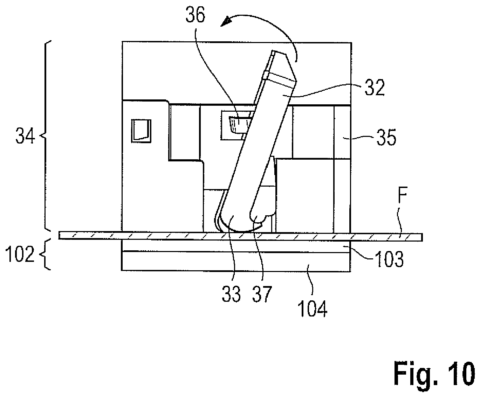

**Fig.9** zeigt eine Bremsleuchte 31 gemäß einer dritten Ausführungsform mit vier Hebeln 32. **Fig.10** zeigt einen Ausschnitt aus der Bremsleuchte 31 in einem Bereich eines der Hebel 32. In dieser Ausführungsform dienen die Hebel 32 jeweils auch als Hinterrastelemente und stellen in anderen Worten jeweils ein kombiniertes Hebel-/Hinterrastelement dar, das insbesondere einstückig ausgeführt sein kann, z.B. aus Kunststoff.

Der Hebel 32 weist an beiden Seiten jeweils nach außen vorspringende Rastvorsprünge 33 auf. Zur Verrastung sind zumindest die Schenkel der Hebel 32 zumindest nach innen federnd ausgebildet, so dass sie bei einem Einführen des Einführbereichs 34 nach innen gedrückt werden, bis sie durch die Ausnehmung S durchgetaucht sind und dann wieder ausrasten, wie in Fig.10 gezeigt. Für ein verstärktes Andrücken der Bremsleuchte 31 an dem Fahrzeugteil F sind die Rastvorsprünge 33 an ihrem dem Aufsatzbereich 102 direkt gegenüberliegenden bzw. im montierten Zustand das Fahrzeugteil F kontaktierenden Kontaktbereich mit dem Fahrzeugteil F exzenterförmig ausgebildet. So kann ein Rastvorsprung 33 bei einem Umschwenken des Hebels 32 aus der in Fig.10 gezeigten Entriegelungsstellung, wie durch den gebogenen Pfeil angedeutet, gleichzeitig als eine Hebelverlängerung wirken, welche das Fahrzeugteil F zwischen sich und die Dichtung 103 einpresst. Auch hier kann ein Grundkörper 35 des Einführbereichs 34 mindestens eine federnd gelagerte Rastnase 36 zum Verrasten des Hebels 32 in der Verriegelungsstellung aufweisen, welche nun beispielhaft seitlich an dem Grundkörper 35 angeordnet ist. In Fig.9 befinden sich alle Hebel 32 in der Entriegelungsstellung, wobei die beiden linken Hebel 32 und die beiden rechten Hebel 32 in eine entgegengesetzte Richtung zeigen, um eine gute Zugänglichkeit zu gewährleisten..

Der Hebel 32 kann an dem Grundkörper 35 um eine feste Drehachse herum drehbar gelagert sein, z.B. durch Aussparungen oder Nasen, welche in entsprechende Nasen oder Aussparungen des Grundkörpers 35 drehbar eingreifen. In der gezeigten dritten Ausführungsform wird der Hebel 32 jedoch lediglich dadurch an dem Grundkörper 35 gehalten, dass die Rastvorsprünge 33 jeweils haken- oder sichelförmig ausgestaltet sind und um ein nasenförmiges Widerlager 37 des Grundkörpers 35 herum greifen. In der in Fig.10 gezeigten Entriegelungsstellung hält das Widerlager 37 den Rastvorsprung 33 an dem Grundkörper 35, Bei einem Umschwenken in die Verriegelungsstellung stützt sich der Hebel 32 an dem Widerlager 37 ab, wobei deren Kontaktpunkt als Drehpunkt oder Auflager dient. Dabei verkürzt sich der minimale Abstand des Hebels 32 zu dem Aufsatzbereich 102, wodurch die Bremsleuchte 31 zwischen dem Hebel 32 und der Dichtung 103 eingepresst wird.

Selbstverständlich ist die vorliegende Erfindung nicht auf die gezeigten Ausführungsbeispiele beschränkt.

So kann die Zahl der Hinterrastelemente auch eine andere sein, z.B. können nur ein Hinterrastelement oder drei, fünf oder mehr Hinterrastelemente verwendet werden.

Die Hinterrastelemente können aus Metall, insbesondere Blech, oder Kunststoff bestehen.

### Bezugszeichenliste

- 1: Bremsleuchte
- 2: Einführbereich
- 3: Grundkörper
- 4: Hinterrastelement
- 5: Hebel
- 6: Kontaktbereich
- 7: Rastvorsprung
- 8: Kante
- 9: Lasche
- 10: Rastnase
- 11: Rastaussparung
- 21: Bremsleuchte
- 22: Hinterrastelement
- 31: Bremsleuchte
- 32: Hebel
- 33: Rastvorsprung
- 34: Einführbereich
- 35: Grundkörper
- 36: Rastnase
- 37: Widerlager
- 100: Bremsleuchte
- 101: Einführbereich
- 102: Aufsatzbereich
- 103: Dichtung
- 104: Abdeckung
- 105: elektrischer Anschluss
- 106: Hinterrastelement
- 107: Rastvorsprung
- 108: Riegel
- 109: Grundkörper
- F: Fahrzeugteil
- S: Ausnehmung
- R: Rand

## Patentansprüche

1. Fahrzeugleuchte (1; 21; 31), insbesondere dritte Bremsleuchte, aufweisend
- einen Einführbereich (2; 34) zum Einführen in eine Ausnehmung (S) eines Fahrzeugteils (F) und
- einen Aufsatzbereich (102) zum Aufsetzen der Fahrzeugleuchte (1; 21; 31) an einem Rand (R) der Ausnehmung (S), wobei der Aufsatzbereich (102) zumindest abschnittsweise seitlich über den Einführbereich hinausragt,
- wobei der Einführbereich (2; 34) mindestens ein Hinterrastelement (4; 22; 32) aufweist, welches dazu ausgestaltet ist, die Fahrzeugleuchte (1; 21; 31) an dem Fahrzeugteil (F) zu verrasten,
- wobei der Einführbereich (2; 34) ferner mindestens ein Verriegelungselement (5; 32) zum Verschieben des mindestens einen Hinterrastelements (4; 22; 32) in Richtung des Aufsatzbereichs (102) aufweist,
**dadurch gekennzeichnet, dass**
- das Verriegelungselement (5; 32) als ein Hebel ausgebildet ist.

2. Fahrzeugleuchte (1; 21; 31) nach Anspruch 1, wobei der Hebel (5; 32) zwischen einer Entriegelungsstellung und einer Verriegelungsstellung verschwenkbar ist, wobei dann, wenn sich der Hebel (5; 32) in der Entriegelungsstellung befindet, das Hinterrastelement (4; 22; 32) einen größeren Abstand von dem Aufsatzbereich (102) annehmen kann als wenn sich der Hebel (5; 32) in der Verriegelungsstellung befindet und wobei der Hebel (5; 32) in der Verriegelungsstellung an dem Einführbereich (2; 34) verrastbar ist.

3. Fahrzeugleuchte (1; 21; 31) nach einem der vorhergehenden Ansprüche, wobei der Hebel (5; 32) mindestens einen exzenterförmigen Kontaktbereich (6) aufweist.

4. Fahrzeugleuchte (1; 21) nach Anspruch 3, wobei der exzenterförmige Kontaktbereich (6) einen minimalen Abstand zu dem Aufsatzbereich (102) aufweist, welcher in der Verriegelungsstellung geringer ist als in der Entriegelungsstellung.

5. Fahrzeugleuchte (1; 21) nach einem der Ansprüche 3 oder 4, wobei der Hebel (5) das Hinterrastelement mit seinem exzenterförmigen Kontaktbereich (6) zum Bewegen des Hinterrastelements (4; 22; 32) kontaktiert.

6. Fahrzeugleuchte (31) nach einem der Ansprüche 3 oder 4, wobei der Hebel (5; 32) und das Hinterrastelement (32) einstückig ausgebildet sind und der mindestens eine exzenterförmige Kontaktbereich dem Aufsatzbereich (102) direkt gegenüberliegt.

7. Fahrzeugleuchte (1; 21; 31) nach einem der vorhergehenden Ansprüche, wobei das Hinterrastelement (4; 22; 32) zumindest bereichsweise ein im Wesentlichen umgekehrt U-förmiges Querschnittsprofil aufweist und an jedem seiner beiden Schenkel mindestens einen nach außen weisenden Rastvorsprung (7; 33) aufweist.

8. Fahrzeugleuchte (21) nach Anspruch 7, wobei das Hinterrastelement (22) zwei Bereiche mit jeweils einem solchen einem im Wesentlichen umgekehrt U-förmiges Querschnittsprofil aufweist.

9. Fahrzeugleuchte (1; 21; 31) nach einem der vorhergehenden Ansprüche, wobei der Hebel (5; 32) bügelförmig ausgebildet ist.

10. Fahrzeugleuchte (1; 21) nach einem der vorhergehenden Ansprüche, wobei der Hebel (5) an dem Einführbereich bezüglich einer fest vorgegebenen Drehachse (D) drehbar gelagert ist.

11. Fahrzeugleuchte (31) nach einem der Ansprüche 1 bis 9, wobei der Hebel (32) an dem Einführbereich achsenlos verschwenkbar ist.

12. Fahrzeugleuchte (1; 21) nach einem der vorhergehenden Ansprüche, wobei das Hinterrastelement (4) Rastvorsprünge (7) aufweist, welche in ihrem nicht eingedrückten bzw. entspannten Zustand seitlich über die Ausnehmung (S) hinausragen.

13. Verfahren zum Montieren einer Fahrzeugleuchte (1; 21; 31), insbesondere Bremsleuchte, nach einem der vorhergehenden Ansprüche an einem Fahrzeugteil (F), **dadurch gekennzeichnet, dass**
das Verfahren mindestens die folgenden Schritte aufweist:
- Einführen des Einführbereichs (2; 34) der Fahrzeugleuchte (1; 21; 31) durch die Ausnehmung (S) des Fahrzeugteils (F), bis das mindestens eine Hinterrastelement (4; 22; 32) nach einem Durchgang durch die Ausnehmung (S) seitlich ausrastet und
- Verschwenken des mindestens einen Hebels (5; 32) so, dass das zugehörige Hinterrastelement (4; 22; 32) sich in Richtung des Aufsatzbereichs (102) bewegt, so dass ein die Ausnehmung (S) umgebender Randbereich des Fahrzeugteils (F) zumindest abschnittsweise zwischen dem Einführbereich (2; 34) und dem Aufsatzbereich (102) eingepresst wird.

14. Verfahren nach Anspruch 13 zum Montieren einer Fahrzeugleuchte (1; 21) nach Anspruch 5, wobei bei dem Schritt des Verschwenkens des mindestens einen Hebels (5) der Hebel (5) mit seinem exzenterförmigen Kontaktbereich (6) das Hinterrastelement in Richtung des Aufsatzbereichs (102) verschiebt.

15. Verfahren nach einem der Ansprüche 13 oder 14 zum Montieren einer Fahrzeugleuchte (1; 21; 31) nach Anspruch 6, wobei bei dem Schritt des Verschwenkens des mindestens einen Hebels (5; 32) der Hebel (5; 32) sich mit seinem exzenterförmigen Kontaktbereich (6; 33) dem Aufsatzbereich (102) nähert.

## Claims

1. A vehicle light (1; 21; 31), especially a third brake light, having
- an introduction region (2; 34) for introduction into a recess (S) in a vehicle part (F), and
- a fitting region (102) for fitting the vehicle light (1; 21; 31) on an edge (R) of the recess (S), wherein the fitting region (102) at least in portions protrudes laterally beyond the introduction region,
- wherein the introduction region (2; 34) has at least one latching element (4; 22; 32) which is configured to latch the vehicle light (1; 21; 31) on the vehicle part (F),
- wherein the introduction region (2; 34) further has at least one locking element (5; 32) for displacing the at least one latching element (4; 22; 32) in the direction of the fitting region (102),
**characterised in that**
- the locking element (5; 32) is formed as a lever.

2. A vehicle light (1; 21; 31) according to Claim 1, wherein the lever (5; 32) is pivotable between an unlocking position and a locking position, wherein, when the lever (5; 32) is in the unlocking position, the latching element (4; 22; 32) can adopt a greater distance from the fitting region (102) than if the lever (5; 32) is in the locking position, and wherein the lever (5; 32) in the locking position can be latched on the introduction region (2; 34).

3. A vehicle light (1; 21; 31) according to one of the preceding claims, wherein the lever (5; 32) has at least one eccentrically shaped contact region (6).

4. A vehicle light (1; 21) according to Claim 3, wherein the eccentrically shaped contact region (6) is at a minimum distance from the fitting region (102) which is less in the locking position than in the unlocking position.

5. A vehicle light (1; 21) according to one of Claims 3 or 4, wherein the lever (5) contacts the latching element with its eccentrically shaped contact region (6) for moving the latching element (4; 22; 32).

6. A vehicle light (31) according to one of Claims 3 or 4, wherein the lever (5; 32) and the latching element (32) are formed in one piece and the at least one eccentrically shaped contact region lies directly opposite the fitting region (102).

7. A vehicle light (1; 21; 31) according to one of the preceding claims, wherein the latching element (4; 22; 32) at least in regions has a substantially inverted U-shaped cross-sectional profile and has at least one outward-pointing latching projection (7; 33) on each of its two arms.

8. A vehicle light (21) according to Claim 7, wherein the latching element (22) has two regions with in each case one such one substantially inverted U-shaped cross-sectional profile.

9. A vehicle light (1; 21; 31) according to one of the preceding claims, wherein the lever (5; 32) is stirrup-shaped.

10. A vehicle light (1; 21) according to one of the preceding claims, wherein the lever (5) is mounted on the introduction region so as to be rotatable with respect to a specified axis of rotation (D).

11. A vehicle light (31) according to one of Claims 1 to 9, wherein the lever (32) is pivotable without a spindle on the introduction region.

12. A vehicle light (1; 21) according to one of the preceding claims, wherein the latching element (4) has latching projections (7) which in their non-pressed-in or unstressed state protrude laterally beyond the recess (S).

13. A method for mounting a vehicle light (1; 21; 31), especially a brake light, according to one of the preceding claims on a vehicle part (F), **characterised in that**
the method comprises at least the following steps:
- introducing the introduction region (2; 34) of the vehicle light (1; 21; 31) through the recess (S) in the vehicle part (F) until the at least one latching element (4; 22; 32) after passing through the recess (S) unlatches laterally, and
- pivoting the at least one lever (5; 32) such that the associated latching element (4; 22; 32) moves in the direction of the fitting region (102), so that an edge region, surrounding the recess (S), of the vehicle part (F), at least in portions, is pressed in between the introduction region (2; 34) and the fitting region (102).

14. A method according to Claim 13 for mounting a vehicle light (1; 21) according to Claim 5, wherein upon the step of pivoting the at least one lever (5) the lever (5) with its eccentrically shaped contact region (6) displaces the latching element in the direction of the fitting region (102).

15. A method according to one of Claims 13 or 14 for mounting a vehicle light (1; 21; 31) according to Claim 6, wherein upon the step of pivoting the at least one lever (5; 32) the lever (5; 32) approaches the fitting region (102) with its eccentrically shaped contact region (6; 33).

## Revendications

1. Feu de véhicule (1 ; 21 ; 31), en particulier troisième feu de frein comprenant :
- une zone d'insertion (2 ; 34) permettant son introduction dans un évidement (S) d'une partie (F) du véhicule, et
- une zone d'application (102) permettant son application sur un bord (R) de l'évidement (S), la zone d'application (102) dépassant au moins par segments latéralement de la zone d'insertion,
- la zone d'insertion (2, 34) comprenant au moins un élément d'accrochage par l'arrière (4, 22, 32) qui est réalisé de façon à permettre d'encliqueter le feu de véhicule (1 ; 21 ; 31) sur la partie (F) du véhicule,
- la zone d'insertion (2 ; 34) comprenant en outre au moins un élément de verrouillage (5 ; 32) permettant de déplacer l'élément d'accrochage par l'arrière (4 ; 22 ; 32) en direction de la zone d'application (102),
**caractérisés en ce que**
l'élément de verrouillage (5 ; 32) est réalisé sous la forme d'un levier.

2. Feu de véhicule (1 ; 21 ; 31) conforme à la revendication 1,
dans lequel le levier (5 ; 32) peut être déplacé par pivotement entre une position de déverrouillage et une position de verrouillage, et, lorsque le levier (5 ; 32) se trouve dans la position de déverrouillage, l'élément d'accrochage par l'arrière (4 ; 22 ; 32) peut être à une distance de la zone d'application (102) plus grande que lorsque le levier (5 ; 32) se trouve dans la position de verrouillage, dans la position de verrouillage le levier (5 ; 32) pouvant être encliqueté sur la zone d'insertion (2 ; 34).

3. Feu de véhicule (1 ; 21 ; 31) conforme à l'une des revendications précédentes,
dans lequel le levier (5 ; 32) comporte au moins une zone de contact (6) de forme excentrée.

4. Feu de véhicule (1 ; 21) conforme à la revendication 3,
dans lequel la zone de contact de forme excentrée (6) a une distance minimum par rapport à la zone d'application (102) qui est plus faible dans la position de verrouillage que dans la position de déverrouillage.

5. Feu de véhicule (1 ; 21) conforme à l'une des revendications 3 et 4,
dans lequel le levier (5) vient en contact avec l'élément d'accrochage par l'arrière par sa zone de contact (6) de forme excentrée pour permettre de déplacer l'élément d'accrochage par l'arrière (4 ; 22 ; 32).

6. Feu de véhicule (31) conforme à l'une des revendications 3 et 4,
dans lequel le levier (5 ; 32) et l'élément d'accrochage par l'arrière (32) sont réalisés en une seule pièce et la zone de contact de forme excentrée est située directement en regard de la zone d'application (102).

7. Feu de véhicule (1 ; 21 ; 31) conforme à l'une des revendications précédentes,
dans lequel l'élément d'accrochage par l'arrière (4 ; 22 ; 32) a au moins par zones un profil de section essentiellement en forme de U inversé, et comporte sur chacune de ses deux branches au moins une saillie d'encliquetage (7 ; 33) dirigée vers l'extérieur.

8. Feu de véhicule (21) conforme à la revendication 7,
dans lequel l'élément d'accrochage par l'arrière (22) comporte deux zones ayant chacune un profil de section essentiellement en forme de U inversé.

9. Feu de véhicule (1 ; 21 ; 31) conforme à l'une des revendications précédentes,
dans lequel le levier (5 ; 32) est réalisé en forme d'étrier.

10. Feu de véhicule (1 ; 21) conforme à l'une des revendications précédentes,
dans lequel dans la zone d'insertion le levier (5) est monté mobile en rotation par rapport à un axe de rotation fixe prédéfini (D).

11. Feu de véhicule (31) conforme à l'une des revendications 1 à 9,
dans lequel le levier (32) peut pivoter sans axe sur la zone d'introduction.

12. Feu de véhicule (1 ; 21) conforme à l'une des revendications précédentes,
dans lequel l'élément d'accrochage par l'arrière (4) comprend des saillies d'encliquetage (7) qui, à l'état non comprimé ou détendu dépassent latéralement de l'évidement (S).

13. Procédé de montage d'un feu de véhicule (1, 21, 31) en particulier d'un feu de frein conforme à l'une des revendications précédentes, sur une partie d'un véhicule (F),
**caractérisé en ce qu'**
il comporte au moins les étapes suivantes consistant à :
introduire la zone d'insertion (2 ; 34) du feu de véhicule (1 ; 21 ; 31) dans l'évidement (S) de la partie (F) du véhicule jusqu'à ce que l'élément d'accrochage par l'arrière (4 ; 22, 32) s'écarte latéralement après être passé dans l'évidement (S),
faire pivoter le levier (5, 32) pour que l'élément d'accrochage par l'arrière (4 ; 22 ; 32) correspondant se déplace dans la direction de la zone d'application (102) de sorte que la zone de bord de la partie (F) du véhicule entourant l'évidement (S) soit comprimée au moins par segments entre la zone d'insertion (2 ; 34) et la zone d'application (102).

14. Procédé conforme à la revendication 13,
de montage d'un feu de véhicule (1 ; 21) conforme à la revendication 5, selon lequel lors de l'étape de pivotement du levier (5), ce levier (5) déplace, par sa zone de contact (6) de forme excentrée, l'élément d'accrochage par l'arrière en direction de la zone d'application (102).

15. Procédé conforme à l'une des revendications 13 et 14 de montage d'un feu de véhicule (1 ; 21 ; 31) conforme à la revendication 6, selon lequel lors de l'étape de pivotement du levier (5 ; 32), ce levier (5 ; 32) se rapproche, de la zone d'application (102) par sa zone de contact (6 ; 33) de forme excentrée.
